Europäisches Patentamt

European Patent Office

Office européen des brevets

(19)

(11) Veröffentlichungsnummer: **0 450 170 A2**

## (12) EUROPÄISCHE PATENTANMELDUNG

(21) Anmeldenummer: 90124156.2

(22) Anmeldetag: 13.12.90

(51) Int. Cl.5: **B01D 35/16, E03B 3/15**

(30) Priorität: 06.04.90 DE 4011173

(43) Veröffentlichungstag der Anmeldung:
09.10.91 Patentblatt 91/41

(84) Benannte Vertragsstaaten:
AT BE CH DE DK ES FR GB GR IT LI LU NL SE

(71) Anmelder: R. SPÄNE GMBH CHEM. TECHN
PRODUKTE
Schafmatt 5

W-7888 Rheinfelden(DE)

(72) Erfinder: **Späne, Rainer**
**Kreisstrasse 38**
**W-7888 Rheinfelden(DE)**

(74) Vertreter: **Andrae, Steffen, Dr. et al**
**Balanstrasse 55**
**W-8000 München 90(DE)**

(54) **Brunnenregeneriergerät.**

(57) Brunnenregeneriergerät mit einer in einem Brunnenschacht auf- und abbewegbaren, rotierbaren Regeneriereinheit zur mechanisch-hydraulischen und/oder chemischen Beseitigung von Ablagerungen im Filterrohr und/oder Filterraum, wobei die Regeneriereinheit (1) lösbar mit einem Antriebs- und Versorgungsrohr verbunden ist, wenigstens im Bereich ihres vorderen Endes einen Bürstenkopf (2) mit in radialer Richtung beweglichen, federbeaufschlagten oder starr befestigten Bürstenleisten (3) aufweist und außerdem zusätzlich mindestens einen flanschartigen Verdrängungskörper (7) und über das Antriebs- und Versorgungsrohr (10) gespeiste Hochdruckdüsen (9) aufweist.

Fig. 1

Die vorliegende Erfindung betrifft ein Brunnenregeneriergerät mit einer in einem Brunnenschacht auf- und abbewegbaren, rotierbaren Regeneriereinheit zur mechanisch-hydraulischen und/oder chemischen Beseitigung von Ablagerungen im Filterrohr und/oder Filterraum.

Brunnen dienen der Gewinnung von Wasser aus wasserführenden Bodenschichten zur Verwendung als Trink- oder auch Brauchwasser. Bei dem heute verbreitesten Brunnentyp, dem Vertikalfilterbrunnen, wird der Brunnenschacht von einem sogenannten Filterrohr gebildet, das in der Regel ein Metall- oder Kunststoffrohr ausreichender Festigkeit mit einer großen Vielzahl von Filterschlitzen oder -löchern ist. Dieses Filterrohr ist umgeben vom sogenannten Filterraum, der in der Regel von einer Kiesschüttung gefüllt ist und den Raum zwischen dem Außenumfang des Filterrohrs und dem umgebenden wasserführenden Erdreich, dem Aquifer, bildet. Um das obere Ende des Filterrohrs herum ist in der Regel der sogenannte Brunnenkopf ausgebildet, meist in Form einer konzentrischen Betongußplatte mit Aus- bzw. Aufmauerung.

Brunnen verlieren im Laufe der Zeit durch Brunnenalterung an Leistung. Dieser Leistungsabfall schreitet dabei immer weiter fort und kann zum völligen Ausfall des Brunnens führen. Hauptsächliche Ursache der Brunnenalterung ist die chemische bzw. biologische Verockerung bzw. Versinterung unter dem Einfluß von häufig gleichzeitig auftretenden Eisen- bzw. Manganbakterien. Diese Bakterien bilden metallhaltige Ablagerungen, die teilweise eine erhebliche Säureresistenz aufweisen, und deren Beseitigung erhebliche Probleme bereitet.

Diese Ablagerungen (Verockerungen, Versinterungen) führen dazu, daß die Filterschlitze im Filterrohr verstopfen und auch der durchflossene Porenraum des Kiesfilters durch derartige Ablagerungen blockiert wird. Ziel der Brunnenregenerierung ist es, alternde Brunnen so zu behandeln, daß die genannten Ablagerungen möglichst tiefgreifend beseitigt werden können und die regenerierten Brunnen ihre alte Förderleistung wieder erlangen oder gar übertreffen.

Da die Ablagerungen vom Inneren des Filterrohrs bis tief in den Filterraum bis hin zum Aquifer zu finden sind, wo sie für eine zwangsläufig vom Brunnenschacht ausgehende Regenerierungsbehandlung sehr viel schwerer zu erreichen sind als Ablagerungen im Inneren des Filterrohrs, wird die Brunnenregenerierung bisher in der Regel als mehrstufiges Regenerierverfahren durchgeführt. Dabei wird die Reinigung des Inneren des Filterrohrs und die Reinigung und Lockerung der Kiesschüttung im Filterraum sowie die Desinfektion als mehrstufige mechanisch-hydraulische und chemische Behandlung durchgeführt. In den einzelnen Stufen einer solchen schrittweisen Behandlung kommen unterschiedliche Regeneriergeräte zur Anwendung, die nach verschiedenen Verfahren arbeiten und unterschiedlich wirken. Zur oberflächlichen Reinigung des Filterrohrs ist es bekannt, in dieses mit Gewichten versehene Bürsten abzusenken, und zur Reinigung der Kiesschüttung im Filterraum wird auf verschiedene Weise versucht, im Brunnenschacht Druckunterschiede aufzubauen, die sich über den Filterraum ausgleichen und dabei zu dessen Lockerung, Durchströmung und Reinigung führen. In diesem Zusammenhang ist eine Behandlung mit Regeneriergeräten mit Verdrängungskörpern bekannt, und es ist auch bekannt, Hochdruckstrahlen auf das Innere des Filterrohrs und das dahintergelegene Kiesbett des Filterraums einwirken zu lassen.

Eine Zusammenfassung von Standardtechniken findet sich beispielsweise in dem Buch "Water Well Maintenance and Rehabilitation Technology" von Gass/Bennett/Maller/Miller, US. EPA, Ada Oklahoma. Ein mehrstufiges Verfahren der Brunnenregenerierung wurde in jüngerer Zeit als "Wilschdorfer Konzeption" beschrieben in "Brunnenbau" 11/89, Seite 588 bis 592.

Bei diesem mehrstufigen Verfahren kommen im Brunnenschacht auf- und abbewegbare Regeneriergeräte zur Anwendung, die als abgepackerte Unterwassermotorpumpe, schwerer Ventilkolben und an einem Seil hängende Unterwassermotorpumpe mit Spülkopf beschrieben werden.

Andere, auf dem Gebiet der Brunnenregenerierung zum Einsatz kommende Regeneriereinheiten sind Hochdruckrotationsspülgeräte mit in Gegenrichtung umlaufenden Hochdruckdüsen oder absenkbare Regeneriereinheiten mit Propellermotorpumpen und Abdichtungsvorrichtungen, die die Bildung von Kammern ermöglichen, in denen Druckunterschiede aufgebaut werden können, aufgrund derer es zu einer Durchströmung des Filterrohrs und der Kiesschüttung kommt.

Es ist jedoch noch kein Brunnenregeneriergerät mit einer Regeneriereinheit bekannt, mit deren Hilfe die meisten der sonst getrennt durchgeführten Arbeitsschritte zur Brunnenregenerierung, einschließlich der Befreiung der Filterrohroberfläche von lockeren Belägen, in einem Arbeitsgang durchgeführt werden können.

Es ist Aufgabe der vorliegenden Erfindung. ein neuartiges Brunnenregeneriergerät zu schaffen, das als Multifunktionsgerät eine nachhaltige sanfte, sichere und schnelle Totalreinigung und Desinfektion des Brunnens einschließlich der Kiesschüttung ermöglicht, ohne diese zu schädigen.

Diese Aufgabe wird durch ein Brunnenregeneriergerät mit einer Regeneriereinheit mit den Merkmalen gemäß Patentanspruch 1 gelöst.

Vorteilhafte Ausgestaltungen sind den Unteransprüchen zu entnehmen.

Das erfindungsgemäße Brunnenregeneriergerät weist eine in einem Brunnenschacht auf- und abbewegbare, rotierbare Regeneriereinheit zur mechanisch-hydraulischen und wahlweise zusätzlich chemischen Beseitungen von Ablagerungen im Filterrohr und Filterraum auf, wobei die Regeneriereinheit lösbar mit einem rotierbaren Antriebs- und Versorgungsrohr verbunden ist und wenigstens im Bereich ihres vorderen Endes, vorzugsweise jedoch sowohl an ihrem vorderen Ende als auch an ihrem hinteren Ende, einen Bürstenkopf mit wenigstens zwei, vorzugsweise fünf Bürstenleisten aufweist, die vorzugsweise in radialer Richtung beweglich und federbeaufschlagt sind und die vorzugsweise im wesentlichen parallel zur Längsachse der Regeneriereinheit auf Durchmessern des Bürstenkopfes angeordnet sind. Im wesentlichen parallel bedeutet dabei eine Anordnung von exakt axialer Anordnung (vertikaler Anordnung) bis zu einer gewissen Neigung gegenüber dieser axialen Anordnung, wobei der Neigungswinkel der Bürstenleisten bis etwa 45° betragen kann. Aus konstruktiven Gründen ist jedoch eine möglichst exakt axiale Anordnung bevorzugt. Es ist ferner bevorzugt, die Bürstenleisten so auszubilden, daß sie leicht auswechselbar sind, und verschiedene Größen von Bürstenleisten, insbesondere was ihre Höhe angeht, vorzusehen, so daß durch entsprechendes Auswechseln der Bürstenleisten Filterrohre mit unterschiedlichen Durchmessern regeneriert werden können.

Die Bürstenleisten sind vorzugsweise in radialer Richtung auf Druckfedern gelagert und können gegen diese verschoben werden, so daß Veränderungen des Innendurchmessers des Filterrohres oder Unregelmäßigkeiten ohne größere Schwierigkeiten ausgeglichen werden können. Da die Regeneriereinheit gleichzeitig in Vertikalrichtung bewegt und rotiert wird, üben die Bürstenköpfe einen gewissen Propeller- oder Druckschraubeneffekt aus, durch den die Druckdifferenzen im Brunnenwasser verstärkt und die Strömungskräfte erhöht werden.

Gemäß der bevorzugten Ausführungsform des erfindungsgemäßen Brunnenregeneriergeräts sind zwischen zwei Bürstenköpfen zusätzlich noch Verdrängungskörper mit flexiblen Umfangsabdichtungen in Form von Dichtlippen sowie ferner gegeneinander versetzte und über das Antriebs- und Versorgungsrohr gespeiste Hochdruckdüsen zur Hochdruckreinigung der Filterrohrinnenwand sowie zur Eindosierung von Chemikalien zur chemischen Auflösung der Verockerungen und/oder Inkrustationen am Filterrohr und im Filterraum angeordnet.

Vorzugsweise kommt dabei eine chemische Behandlung zur Anwendung, wie sie in der EP-PS 113 060 beschrieben ist.

Bei dem erfindungsgemäßen Brunnenregeneriergerät ist die Regeneriereinheit mit den beschriebenen Merkmalen lösbar mit einem Antriebs- und Versorgungsrohr verbunden, das mit einer Motor- und Getriebeeinheit auf der Erdoberfläche verbunden ist, die die Rotations- und Vertikalbewegung des Antriebs- und Versorgungsrohrs und damit der Regeneriereinheit erzeugt. Das Antriebs- und Versorgungsrohr kann in einer Weise, wie sie aus der Bohrtechnik, z.B. der Erdölbohrtechnik, gut bekannt ist, durch Einfügen weiterer Rohrteile ständig weiter verlängert werden. Die Rotations- und Vertikalbewegung des Antriebs- und Versorgungsrohrs mit der Regeneriereinheit wird vorzugsweise unter Verwendung von zwei unabhängigen Motoren erzeugt, von denen einer nur für die Erzeugung der Rotationsbewegung zuständig ist und ein Bohrrohr-Gewinde aufweist, das gleichzeitig eine Dreheinführung für das Einführen von Chemikalien und Wasser ins Innere des Antriebs- und Versorgungsrohrs aufweist. Dieser erste Motor weist vorzugsweise eine eingebaute Rutschkupplung auf und führt zusammen mit dem Ende des Antriebs- und Versorgungsrohrs eine vertikale Auf- und Abbewegung an einer Führungssäule aus, deren Richtung durch Endschalter umschaltbar ist. Um zu Betriebsbeginn eine genau senkrechte Anordnung der Regeneriereinheit über dem Filterrohr sicherzustellen und die zur Verhinderung einer Verkantung erforderliche Feinabstimmung vornehmen zu können, weist die Motor- und Getriebeeinheit vorzugsweise zusätzlich eine Handkurbel auf, die die Auf- und Abbewegung des ersten Motors im Handbetrieb ermöglicht. Ein zweiter Getriebemotor sorgt für die gleichzeitige vertikale Auf- und Abbewegung.

Nachfolgend wird das erfindungsgemäße Brunnenregeneriergerät anhand bevorzugter Ausführungsformen unter Bezug auf die Figuren noch näher erläutert.

Es zeigen:

Figur 1    die Regeneriereinheit eines erfindungsgemäßen Brunnenregeneriergeräts an eine Antriebs- und Versorgungsrohr befestigt und im Filterrohr eines Brunnens angeordnet;

Figur 2    eine Draufsicht auf die Regeneriereinheit des erfindungsgemäßen Brunnenregeneriergeräts bzw. auf den oberen Bürstenkopf der Regeneriereinheit; und

Figur 3    die Motor- und Getriebeeinheit für den oberirdischen Antrieb des Antriebs- und Versorgungsrohrs bzw. der damit verbundenen Regeneriereinheit.

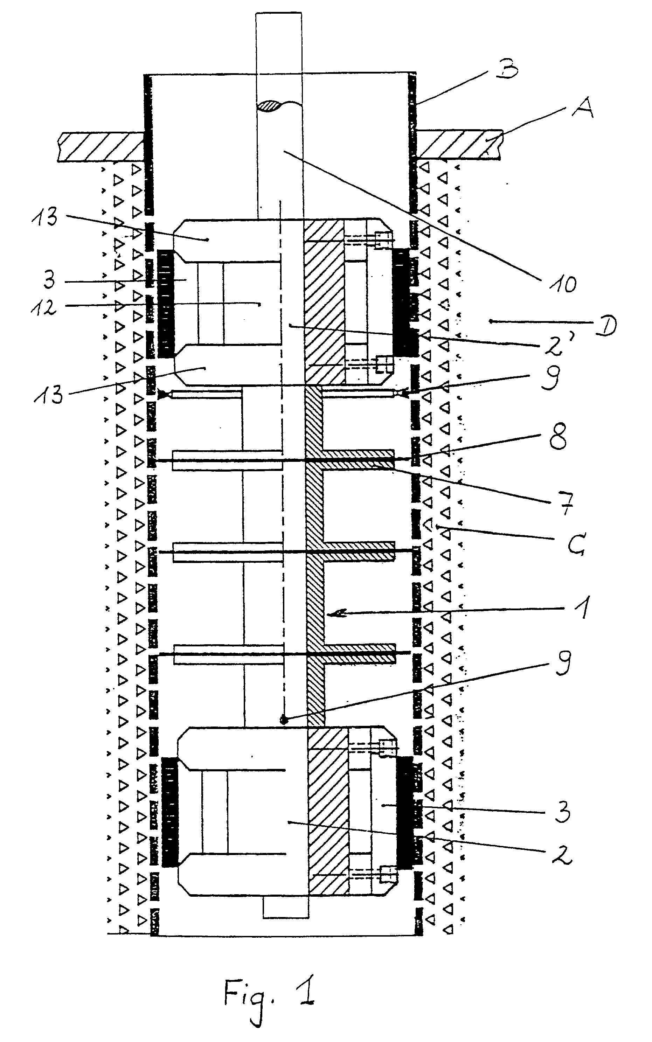

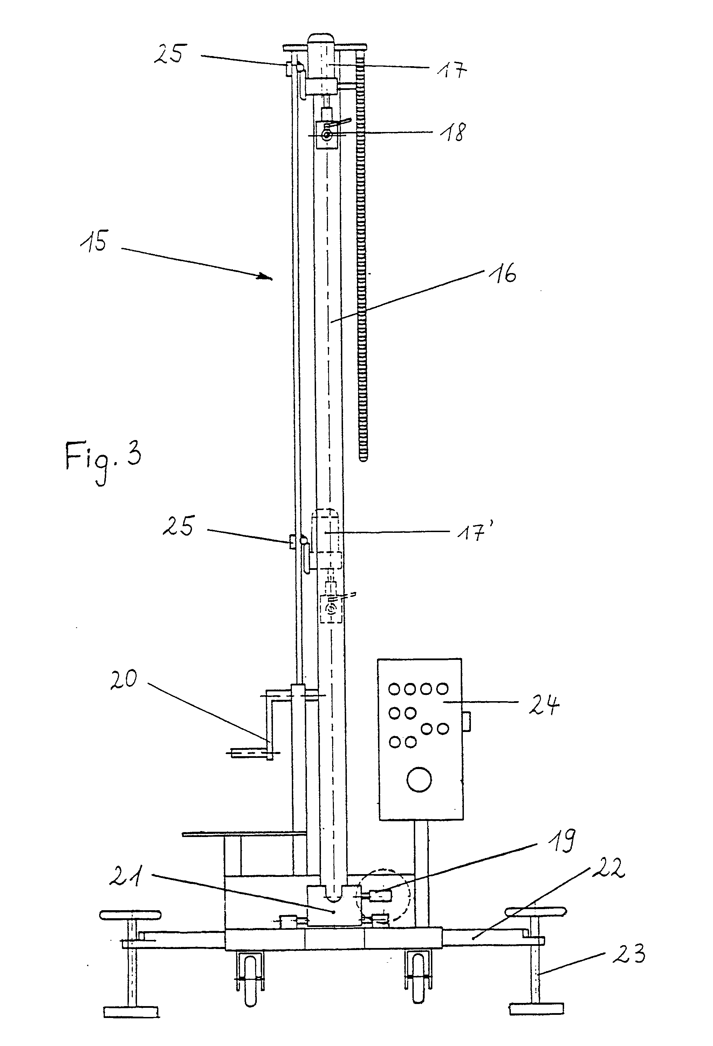

Figur 1 zeigt eine Schnittansicht durch einen Brunnen mit einem Brunnenkopf A, einem Filterrohr B, einem Filterraum mit Kiesschüttung C und dem wasserführenden Erdreich (Aquifer) D, in dem die Regeneriereinheit 1 eines erfindungsgemäßen Brunnenregeneriergeräts angeordnet ist. Diese Regeneriereinheit 1 ist lösbar, jedoch ohne die Möglichkeit einer gegenseitigen Rotation mit einem Antriebs- und Versorgungsrohr 10 verbunden, das mit der oberirdisch angeordneten Motor- und Getriebeeinheit 15 (Figur 3) verbunden ist.

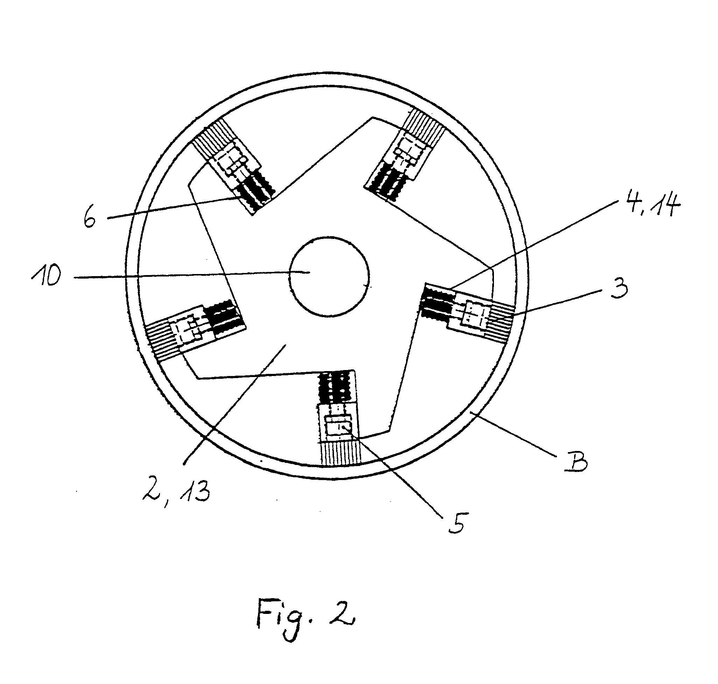

Die Regeneriereinheit 1 weist in der dargestellten bevorzugten Ausführungsform an ihren beiden Enden Bürstenköpfe 2 und 2' auf. Jeder dieser Bürstenköpfe hat in der Draufsicht (Figur 2) einen als zahnradähnlich beschreibbaren Querschnitt und weist fünf Bürstenleisten 3 auf. Diese Bürstenleisten sind auf Druckfedern 6 gelagert und mit Hilfe von Bundschrauben 5, deren Köpfe in einer stufigen Bohrung gleiten können, mit dem Rumpf oder Kern des Bürstenkopfs 2 verschraubt. Die fünf Bürstenleisten sind gleichmäßig über den Umfang des Bürstenkopfes verteilt angeordnet. Zu ihrer seitlichen Abstützung in Umfangsrichtung bei der Rotation des Bürstenkopfes sind am Bürstenkopf Anlageflächen 4, 14 ausgebildet, an denen die Bürstenleisten bei der Einwirkung eines radialen Drucks unter Zusammendrücken der Druckfedern 6 entlanggleiten können. Diese Anlageflächen 4 bzw. 14 werden von im wesentlichen radial verlaufenden Zahnflanken des klinkenradähnlichen "Zahnrads" gebildet. Die Anlageflächen 4, 14 sind dabei etwa um die halbe Breite einer Bürstenleiste gegenüber einem Durchmesser des Bürstenkopfes 2 versetzt, um eine Anordnung der Bürstenleisten 3 auf einem Durchmesser des Bürstenkopfes zu ermöglichen. Es sei jedoch darauf hingewiesen, daß die Anordnung der Bürstenleisten nicht unbedingt exakt in radialer Richtung erfolgen muß, sondern daß auch leicht zur Horizontalen geneigte und/oder gegen den Durchmesser des Bürstenkopfes versetzte Anordnungen denkbar sind.

Nimmt man das Risiko in Kauf, daß sich in radialer Richtung unbewegliche Bürsten in einem unregelmäßigen Querschnitt eines Filterrohrs verklemmen, können die in radialer Richtung beweglichen Bürstenleisten auch durch solche ersetzt sein, die starr mit dem Kern des Bürstenkopfs verbunden sind. In jedem Falle sollte jedoch durch Vorsehen geeigneter bürstenfreier Bereiche dafür gesorgt werden, daß sich Feinsand und Schluff nicht in den Bürsten festsetzen, sondern diese bei der rotierenden Auf- und Abbewegung freigespült werden.

Vorzugsweise sind daher die radial beweglichen Bürstenköpfe so gestaltet, daß sich die Anlageflächen 4, 14 nicht über die gesamte Höhe eines Bürstenkopfes 2 erstrecken, sondern nur in den Endbereichen des Bürstenkopfs 2 ausgebildet sind. Der Bürstenkopf weist in diesem Falle im Bereich seiner oberen und unteren Deckfläche flansch- bzw. scheibenartige Ausformungen mit dem bereits beschriebenen (Figur 2) zahnradähnlichen oder besser fräserähnlichen Querschnitt auf. Bei der in Figur 1 gezeigten Ausführungsform sind die Bürstenleisten über zwei Bundschrauben mit entsprechenden Druckfedern an dem Bürstenkopf radial verschiebbar befestigt. Es können jedoch auch mehrere derartige oder wirkungsgleiche Befestigungen vorgesehen sein, und es sind auch konstruktive Ausführungen denkbar, bei denen kurze Bürstenleisten von nur einer derartigen Befestigung am Bürstenkopf gehalten werden. Die Bürstenleisten weisen vorzugsweise Borsten aus einem steifen Kunststoffmaterial auf.

In der beschriebenen Ausführungsform sind die Bürstenleisten exakt vertikal angeordnet. Zur Modifizierung des Propellereffekts, der bei der gleichzeitigen Rotation und Vertikalbewegung der Regeneriereinheit erhalten wird, können die Bürstenleisten jedoch auch gegenüber der Brunnenachse schräg gestellt werden. Eine derartige Anordnung bietet jedoch normalerweise keine besonderen wesentlichen Vorteile.

Durch die radial beweglichen Bürstenleisten lassen sich dann, wenn diese an einem einstückigen Bürstenkopf z.B. der in Figur 1 gezeigten Art angeordnet sind, Unterschiede des Brunnendurchmessers im Größenordnungsbereich von einigen Zentimetern, z.B. von 0 bis 8 cm, ausgleichen. Um ein und denselben Bürstenkopf für verschiedene Brunnen mit stärker abweichenden Durchmessern verwenden zu können und dadurch den Vorrat an verschiedenen bereitzuhaltenden Bürstenköpfen vermindern zu können, kann es vorteilhaft sein, den Bürstenkopf so auszugestalten, daß sein Außendurchmesser bzw. -umfang auf verschiedene Werte einstellbar ist. Das kann beispielsweise dadurch geschehen, daß der Bürstenkopf aus Segmenten oder Backen aufgebaut ist, die unter Vergrößerung des Außenumfangs beweglich sind, z.B. durch Verschiebung auf einem konischen oder stufigen Kern, der geeignete Stütz- und Führelemente aufweist und auf dem die Segmente oder Backen arretiert werden können, oder unter Führung in Spiralkurven. Andere z.B. aus dem Maschinenbau für das Spannen von Werkstücken oder Werkzeugen oder aus der Brems- und Kupplungstechnik bekannte Lösungen zur Variation von Durchmessern runder Elemente können in geeigneter Anpassung an den obigen Zweck ebenfalls zur Anwendung kommen.

Zwischen den beiden Bürstenköpfen 2 und 2' der in Figur 1 dargestellten bevorzugten Regeneriereinheit 1 sind in regelmäßigen Abständen noch drei scheibenförmige Verdrängungskörper 7 mit Dichtlippen 8 angeordnet, die einen Kolben bilden. Die Dichtlippen 8 sind beispielsweise aus Gummi oder einem anderen Material mit einer gewissen Elastizität und Nachgiebigkeit hergestellt. Die Verdrängungskörper erzeugen bei der Vertikalbewegung der Regeneriereinheit in an sich bekannter Weise Druck- und Saugeffekte im Brunnenwasser, die sich in den Filterraum C übertragen und dabei die Chemikalien in den Filterraum transportieren und dessen Durchströmung, Reinigung und Lockerung bewirken.

Zusätzlich zu den Verdrängungskörpern 7 weist die in Figur 1 dargestellte bevorzugte Regeneriereinheit noch vier Hochdruckdüsen 9 auf. Diese Hochdruckdüsen 9 sind in Form von zwei gegeneinander um 90° versetzten Paaren ausgebildet und befinden sich in unmittelbarer Nähe der Bürstenköpfe 2 bzw. 2'. Durch diese Hochdruckdüsen können Spülflüssigkeiten zum Abstrahlen der Filterrohrinnenwände zugeführt werden, vorzugsweise werden über die Hochdruckdüsen 9 jedoch die Chemikalien zur Lösung der Verockerungen und Versinterungen des Filterrohrs und des Filterraums zugeführt.

Die gleichzeitige Wirkung der rotierenden Bürstenköpfe mit dem für sie typischen Propellereffekt, des von den Verdrängungsscheiben gebildeten, erhebliche Druckunterschiede erzeugenden Kolbens sowie der Hochdruckdüsen führt zu einer schnellen und effektiven Reinigung der Innenwände des Filterrohrs, Lockerung und Durchströmung des Filterraums unter guter Durchmischung mit der über die Hochdruckdüsen 9 zugeführten Chemikalie, und es werden innerhalb kürzester Zeit alle für die Brunnenregenerierung erforderlichen Maßnahmen mehr oder weniger gleichzeitig durchgeführt.

Um aus dem Brunnenschacht Sand und von den Bürsten entfernte Belagreste absaugen zu können, weist die Regeneriereinheit 1 vorzugsweise am unteren Ende der Durchgangsöffnung für das Antriebs- und Versorgungsrohr ein Einwegventil, z.B. in Form einer Ventilklappe, auf, das von einem Überdruck im Rohr in geschlossener Stellung gehalten wird, das jedoch beim Anlegen eines Unterdrucks die Rohröffnung freigibt und ein Absaugen von z.B. Sand aus dem Brunnenschacht ermöglicht. Dadurch ist ein derartiges Absaugen möglich, ohne daß die Regeneriereinheit aus dem Brunnen entfernt und/oder ausgetauscht werden muß.

Die Regeneriereinheit 1 kann über das Antriebs- und Versorgungsrohr grundsätzlich mit bekannten Vorrichtungen betrieben werden, wie sie beispielsweise als bewegliche Bohrvorrichtungen zur Bodenerkundung bekannt sind. Unter Verwendung üblicher Bohrrohrgewinde am Ende des Antriebs- und Versorgungsrohrs und an den zugehörigen Maschinen wird ein vollständiges Brunnenregeneriergerät mit einer erfindungsgemäßen Regeneriereinheit 1 erhalten.

Vorzugsweise wird jedoch zum Antrieb des Antriebs- und Versorgungsrohrs 10 eine speziell ausgestaltete Motor- und Getriebeeinheit 15 verwendet, wie sie in Figur 3 dargestellt ist. Diese Motor- und Getriebeeinheit 15 ist eine mit Rädern versehene, fahrbare Einrichtung, die Stützbeine 22 aufweist, die an Ort und Stelle über dem Brunnenschacht ausgezogen werden können und die höhenverstellbare Tellerfüße 23 tragen, die eine genau senkrechte Anordnung über einem Brunnenschacht und eine Feinabstimmung dieser Anordnung ermöglichen. Zu diesem Zweck sind zwei Libellen an der Vorrichtung angebracht. Die Einheit 15 weist eine Führungssäule 16 auf, an der ein erster Rotationsmotor auf- und abbewegt werden kann. Dieser Rotationsmotor 17 ist mit einem Rohrgewinde 18 verbunden, in das das Ende des Antriebs- und Versorgungsrohrs 10 bei der Drehung des Motors 17 automatisch angeschraubt werden kann. Vorzugsweise kommt dabei ein aus der Bohrtechnik bekanntes konisches, sogenanntes API-Gewinde zu Anwendung. Um die Zuführung der Chemikalien für die chemische Brunnenbehandlung ins Innere des Antriebs- und Versorgungsrohrs zu ermöglichen, weist das Rohrgewinde 18 eine als Dreheinführung bekannte Eindosiervorrichtung für die Chemikalien oder gegebenenfalls auch Druckflüssigkeiten auf, beispielsweise eine Dreheinführung mit Kugelhahn. Der erste Motor 17 wird von einem zweiten Motor 19 in eine Vertikalbewegung versetzt, und beim Erreichen von Hub-Endstellungen, die durch verschiebbare Endschalter 25 festgelegt werden, wird die Laufrichtung des zweiten Motors 19 umgekehrt und damit auch die Vertikalbewegung des ersten Motors 17. Um insbesondere während der Phase der Aufstellung des erfindungsgemäßen Brunnenregeneriergeräts eine Feinabstimmung zu ermöglichen und dabei die Regeneriereinheit vorsichtig in den Brunnen absenken zu können, ist vorzugsweise zusätzlich zu dem Motor noch eine Handkurbel 20 vorgesehen, die eine manuelle Erzeugung der Vertikalbewegung des Motors 17 ermöglicht. Die genauen Betriebsparameter für den Motor 17 und dem Motor 19 werden vorzugsweise über eine Schalttafel 24 eingegeben und überwacht.

Um Filterrohre über ihre ganze, oft erhebliche Tiefe reinigen zu können, ist es erforderlich, daß das Antriebs- und Versorgungsrohr 10 fortlaufend verlängert werden kann. Wie aus der Bohrtechnik bekannt ist, werden zu diesem Zweck neue, in der Regel 2m lange Rohrstücke an das Ende des bereits montierten Antriebs- und Versorgungsrohrs 10 angefügt, in der Regel über geeignete Rohrgewinde, und anschließend wird das eingesetzte neue Rohrstück über das Rohrgewinde 18 mit dem ersten Motor 17 verbunden. Um das Ende des bereits im Filterrohr befindlichen Antriebs- und Versorgungsrohrs 10 gegen ein Hineinfallen in den Brunnen zu sichern, weist das Gerät eine automatisch wirkende Rohrfangvorrichtung 21 in Form einer Wechselkippe auf. Diese besteht im wesentlichen aus einer Platte mit einer Aussparung, deren Weite etwas größer ist als der Durchmesser des Antriebs- und Versorgungsrohrs, aber kleiner als der Außendurchmesser der Verschraubung. Soll ein weiteres Rohrstück angefügt werden, wird die Rohrfangvorrichtung 21 zum Antriebs- und Versorgungsrohr hin in waagerechte Stellung verschwenkt. Die Vorrichtung 21 umfaßt dabei das Rohr 10 und hält dessen verstärktes Verschraubungsende fest, so daß das Antriebs- und Versorgungsrohr während der Montage nicht in den Brunnen abrutschen kann.

Das erfindungsgemäße Brunnenregeneriergerät läßt sich mit wenigen Handgriffen in einzelne Baugruppen (Motoren, Getriebe, Regeneriereinheit, Schalt- und Werkzeugkasten) zerlegen, was einen einfachen und sicheren Transport auch mit kleinen Nutzfahrzeugen ermöglicht. Unter Verwendung des erfindungsgemäßen Brunnenregeneriergeräts ist eine schnelle und gründliche Regenerierung auch stark gealterter Brunnen mit erheblich verminderter Leistungsfähigkeit möglich.

**Patentansprüche**

1.  Brunnenregeneriergerät mit einer in einem Brunnenschacht auf- und abbewegbaren, rotierbaren Regeneriereinheit zur mechanisch-hydraulischen und/oder chemischen Beseitigung von Ablagerungen im Filterrohr und/oder Filterraum,

    **dadurch gekennzeichnet**

    daß die Regeneriereinheit (1) mit einem rotierbaren Antriebs- und Versorgungsrohr (10) lösbar verbunden ist und wenigstens im Bereich ihres vorderen Endes einen Bürstenkopf (2) mit wenigstens zwei in radialer Richtung beweglichen, federbeaufschlagten oder starr befestigten Bürstenleisten (3) aufweist.

2.  Brunnenregeneriergerät nach Anspruch 1, dadurch gekennzeichnet, daß der Bürstenkopf (2) auf seinem Umfang Anlageflächen (4) aufweist, die die in radialer Richtung beweglichen Bürstenleisten (3) bei der Rotation des Bürstenkopfes (2) in Umfangsrichtung seitlich abstützen.

3.  Brunnenregeneriergerät nach Anspruch 1 oder 2, dadurch gekennzeichnet, daß die Bürstenleisten (3) im wesentlichen parallel zur Längsachse der Regeneriereinheit (1) auf Durchmessern des Bürstenkopfes (2) angeordnet sind.

4.  Brunnenregeneriergerät nach Anspruch 2 oder 3, dadurch gekennzeichnet, daß der Bürstenkopf (2) einen zahnradähnlichen Querschnitt aufweist, die Anlageflächen (4) von im wesentlichen in radialer Richtung verlaufenden Zahnflanken gebildet werden und die Anzahl der Anlageflächen (4) der Zahl der Bürstenleisten (3) entspricht.

5.  Brunnenregeneriergerät nach einem der Ansprüche 1 bis 4, dadurch gekennzeichnet, daß der Bürstenkopf (2) mindestens zwei mit einem axialen Kernstück (12) verbundene Flansche (13) mit zahnradähnlichem Querschnitt und Anlageflächen (14), die von im wesentlichen in radialer Richtung verlaufenden Zahnflanken gebildet werden, aufweist und daß jede Bürstenleiste (3) von mindestens zwei derartigen Anlageflächen (14) in Umfangsrichtung seitlich abgestützt wird.

6.  Brunnenregeneriergerät nach einem der Ansprüche 1 bis 5, dadurch gekennzeichnet, daß die Bürstenleisten (3) mit Hilfe von Bundschrauben (5), auf denen sie in radialer Richtung unter Zusammendrücken von Druckfedern (6) verschiebbar sind, mit dem Kern (12) des Bürstenkopfes (2) verbunden sind.

7.  Brunnenregeneriergerät nach einem der Ansprüche 1 bis 6, dadurch gekennzeichnet, daß jeder Bürstenkopf (2) fünf Bürstenleisten (3) aufweist.

8.  Brunnenregeneriergerät nach einem der Ansprüche 1 bis 7, dadurch gekennzeichnet, daß der Bürstenkopf (2) einstückig ausgebildet ist oder daß er so ausgebildet ist, daß sein Außendurchmesser auf veränderliche Größen eingestellt werden kann.

9.  Brunnenregeneriergerät nach einem der Ansprüche 1 bis 8, dadurch gekennzeichnet, daß die Regeneriereinheit (1) zusätzlich zu dem mindestens einen Bürstenkopf (2) noch mindestens einen flanschartigen, in Umfangsrichtung mit Dichtlippen (8) versehenen Verdrängungskörper (7) und/oder über das Antriebs- und Versorgungsrohr (10) gespeiste Hochdruckdüsen (9) zur Hochdruckreinigung und/oder Eindosierung von Chemikalien zur chemischen Lösung der Ablagerungen und/oder Desinfizierung aufweist.

10. Brunnenregeneriergerät nach Anspruch 9, dadurch gekennzeichnet, daß die Regeneriereinheit (1) zwei Bürstenköpfe (2) aufweist und der mindestens eine Verdrängungskörper (7) und/oder die Hochdruckdüsen (9) zwischen diesen beiden Bürstenköpfen (2) angeordnet sind.

11. Brunnenregeneriergerät nach Anspruch 10, dadurch gekennzeichnet, daß die Regeneriereinheit (1) zwei Bürstenköpfe (2,2') und zwischen diesen Bürstenköpfen (2,2') angeordnet drei flanschartige, mit Dichtlippen (8) versehene Verdrängungskörper (7) sowie vier Hochdruckdüsen (9) aufweist.

12. Brunnenregeneriergerät nach Anspruch 11, dadurch gekennzeichnet, daß die Hochdruckdüsen (9) zwischen den Bürstenköpfen (2,2') und den jeweils nächsten Verdrängungskörpern (7) angeordnet sind und zwei um 90° gegeneinander versetzt angeordnete Paare von in entgegengesetzte Richtungen wirkenden Düsen (9) bilden.

13. Brunnenregeneriergerät nach einem der Ansprüche 1 bis 12, dadurch gekennzeichnet, daß das Antriebs- und Versorgungsrohr (10) mit einer Motor- und Getriebeeinheit (15) zur Erzeugung der Rotations- und Vertikalbewegung der Regeneriereinheit (1) verbunden ist und stufenweise verlängert werden kann.

14. Brunnenregeneriergerät nach Anspruch 13, dadurch gekennzeichnet, daß die Motor- und Getriebeeinheit (15) einen ersten, an einer Führungssäule (16) auf- und abbewegbaren Motor (17) mit einem Rohrgewinde (18) mit einer Dreheinführung zur Chemikalien- und Wasser-Eindosierung in das Antriebs- und Versorgungsrohr (10) aufweist, daß zur Erzeugung dieser Auf- und Abbewegung ein weiterer Motor (19) vorgesehen ist, daß Endschalter (25) für die Umkehrung der Auf- und Abbewegung des ersten Motors (17) vorgesehen sind und daß zusätzlich eine Handkurbel (20) vorgesehen ist, die eine Auf- und Abbewegung des ersten Motors (17) alternativ zum Motorbetrieb im Handbetrieb ermöglicht.

15. Brunnenregeneriergerät nach Anspruch 13 oder 14, dadurch gekennzeichnet, daß die Motor- und Getriebeeinheit (15) eine schwenkbare Rohrfangvorrichtung (21) aufweist, die beim Einbau eines Verlängerungsrohrs für das Antriebs- und Versorgungsrohr (10) das Ende des mit der Regeneriereinheit (1) bereits verbundenen Antriebs- und Versorgungsrohrs (10) festhält.

16. Brunnenregeneriergerät nach einem der Ansprüche 13 bis 15, dadurch gekennzeichnet, daß die Motor- und Getriebeeinheit (15) fahrbar ist und zur Aufstellung über dem Brunnenschacht ausziehbare Stützbeine (22) mit höhenverstellbaren Tellerfüßen (23) aufweist.

Fig. 1

Fig. 2

Fig. 3